# EUROPÄISCHE PATENTSCHRIFT

(11) **EP 0 859 181 B1**
(45) Veröffentlichungstag und Bekanntmachung des Hinweises auf die Patenterteilung: **05.04.2006**
(21) Anmeldenummer: 97119039.2
(22) Anmeldetag: 31.10.1997
(51) Int. Cl.: F16L 3/22, A47B 81/00, B65D 71/00, B65D 61/00, B65D 57/00, B65D 85/20

(54) **Vorrichtung zur Abstützung von Rohren**
Supporting device for pipes
Dispositif de support pour tuyaux

(30) Priorität: 15.02.1997 DE 29702638 U
(43) Veröffentlichungstag der Anmeldung: 19.08.1998
(73) Patentinhaber: Thread Guard Technology Ltd., Gibraltar (GI)
(72) Erfinder: Schneider, Volkrad W. H., Gibraltar (GI)
(74) Vertreter: Busse & Busse Patentanwälte

(56) Entgegenhaltungen:
- EP-A- 0 716 030
- DE-A- 3 604 008
- DE-U- 9 406 019
- GB-A- 2 059 905
- US-A- 3 806 265
- US-A- 4 901 870
- US-A- 5 205 020

## Beschreibung

Die Erfindung betrifft eine Vorrichtung zur Abstützung von Rohren bei deren Lagerung und Transport in einer vorgegebenen Anordnung neben- und übereinander in beabstandeten Lagen in einer Ausbildung gemäß dem Oberbegriff des Anspruchs 1.

Bei einer bekannten Vorrichtung dieser Art (EP-A-0 716 030) ist jeder Rohrhaltekörper mehrteilig ausgebildet und umfaßt zwischen seitlichen Trägerleisten aufgefädelte und festgelegte Aufnahmeelemente, die jeweils gemeinsam eine trapezförmige Ausnehmung für die Rohraufnahme bilden. Stimseitige Klemmrahmen und zwischenliegende Distanzhalteplatten sichern den Zusammenhalt aller Teile eines Rohrhaltekörpers, dessen Ausnehmungen in ihrer Trapezform für die Aufnahme von Rohren unterschiedlicher Durchmesser geeignet sind.

Es ist femer eine Vorrichtung aus Rohrhaltekörpem bekannt (GB-A-2 059 905), die ober- und/oder unterseitig eine Anzahl von einander diametral gegenüberliegenden, untereinander beabstandeten, teilkreisförmigen Ausnehmungen zur Rohraufnahme aufweisen. Die Rohrhaltekörper bestehen aus Kunststoff-Spritzteiten und umfassen eine längslaufende, sich im wesentlichen über die Länge der Rohrhaltekörper erstreckende Verstärkungseinlage, die aus einem Rechteckrohr besteht, das mit einem Sand-Zement-Gemisch gefüllt ist. Zum Zusammenspannen der Rohrhalteteile mit einliegenden Rohren findet ein Spannband Anwendung, das sich rings um die den Rohren zugeordnete Gruppe von Rohrhaltekörpern herum erstreckt.

Die Erfindung befaßt sich mit dem Problem, eine kostengünstig herstellbare Stützvorrichtung zu schaffen, die bei leichter Ausführung und kostengünstiger Herstellbarkeit universell einsetzbar ist. Die Erfindung löst das Problem mit den Merkmalen des Anspruchs 1. Hinsichtlich wesentlicher weiterer Ausgestaltungen wird auf die Ansprüche 2 bis 11 verwiesen.

Die erfindungsgemäße Vorrichtung kann für Rohre eines breiten Durchmesserspektrums zum Einsatz kommen, da innerhalb der trapezförmigen Ausnehmungen Rohre, deren Durchmesser innerhalb eines durch die Trapezform bestimmbaren Durchmesserbereiches liegen, sicher abgestützt werden können. Die Rohrkörper sind dabei als einteilige Elemente einfach, preisgünstig herstellbar, überaus stabil und auf einfache Weise als Einheit sicher zusammenspannbar, wobei die Ausbildung mit stimseitigen Nuten eine versenkte und damit geschützte Durchführung der Spannmittel ermöglichen. Dabei ist sichergestellt, daß die Verstärkungseinlagen die Rohrhaltekörper bis in ihre Endbereiche verstärken, da für die Nutbildung lediglich der Mittelschenkel der Verstärkungseinlage ausgenommen ist.

Weitere Einzelheiten und Vorteile ergeben sich aus der nachfolgenden Beschreibung und der Zeichnung, in der ein Ausführungsbeispiel des Gegenstands der Erfindung schematisch näher veranschaulicht ist. In der Zeichnung zeigen:
- Fig. 1: eine perspektivische Ansicht einer Vorrichtung nach der Erfindung zur Aufnahme von drei Lagen von je drei Rohren,
- Fig. 2: eine perspektivische Einzeldarstellung eines Rohrträgerkörpers aus Fig. 1,
- Fig. 3: eine Seitenansicht des Rohrträgerkörpers nach Fig. 2 zur Veranschaulichung des Durchmesserbereiches aufnehmbarer Rohre,
- Fig. 4: eine Ansicht des rechten Endes des untersten Rohrträgerkörpers in Fig. 1,
- Fig. 5: eine Ansicht des linken Endes des obersten Rohrträgerkörpers in Fig. 1,
- Fig. 6: einen Schnitt durch den Rohrträgerkörper gemäß der Linie A-A in Fig. 3,
- Fig. 7: eine Stirnansicht einer Vorrichtung nach der Erfindung mit Schraubspannschlössern als Spannmittel, und
- Fig. 8: eine abgebrochene Ansicht der einseitigen Stimenden der Rohrhaltekörper zur Veranschaulichung eines Schraubspannschlosses.

Die in der Zeichnung veranschaulichte Stützvorrichtung umfaßt in Betriebsstellung unter und über jeder Rohrlage vertikal übereinander angeordnete Rohrhaltekörper 1, die ober- und unterseitig eine Anzahl von einander diametral gegenüberliegenden, untereinander beabstandeten Ausnehmungen 2 zur Rohraufnahme aufweisen. Bei dem dargestellten Beispiel weist jeder Rohrhaltekörper 1 ober- und unterseitig je drei Ausnehmungen 2 auf, so daß er zur Abstützung von drei Rohren innerhalb einer Rohrlage geeignet ist Es versteht sich jedoch, daß die Anzahl der Ausnehmungen auch zwei, vier und mehr als vier betragen kann. Auch die Zahl der Rohrlagen ist nicht auf drei beschränkt; sie kann zwei, vier und mehr als vier betragen.

Die Ausnehmungen 2 haben sämtlich eine trapezförmige Querschnittsform, wobei die jeweils nach außen hin divergierenden Seitenflächen 3 mit der zwischen ihnen liegenden Basisfläche 4 einen Winkel von 120 bis 150°, vorzugsweise 135°, einschließen. Die divergierenden Seitenflächen 3 gehen außenseitig in zu den Basisflächen 4 parallel ausgerichtete Außenflächen 5 der Rohrhaltekörper 1 über, die bei dem in einer Einheit obersten bzw. untersten Rohrhaltekörper 1 als Standfläche nutzbar sind.

Endseitig weisen die Rohfialtekörper 1 ebene, in Betriebsstellung vertikale Stimflächen 6 auf, welche die jeweils äußeren Endkanten 7,8 der innenseitig benachbarten Außenflächen 5 verbinden. Dabei sind die Rohrhaltekörper 1 an ihren Stimenden jeweils mit einer in Betriebsstellung vertikalen, von oben nach unten durchgehenden Nut 9 versehen, die bei den in einer Einheit zwischenliegenden Rohrhaltekörpern 1 zur Durchführung von Spannmitteln 10 dienen.

Sämtliche Stirnenden der Rohrhaltekörper 1 sind mit einer in Höhe der horizontalen Mittelebene 12 der Rohrhaltekörper 1 verlaufenden, durchgehenden Querbohrung 11 versehen, die zur Aufnahme eines die stirnseitige Nut 9 frei durchquerenden Quersteckers 13 vorgesehen sind. Diese über Splinte sicherbaren Querstecker 13 werden in die Querbohrungen 11 des in einer Einheit obersten und untersten Rohrhaltekörpers 1 eingesetzt. Sie dienen zur Abstützung der Spannmittel, die als um die Querstecker 11 herumgeführte Flachbänder 10 ausgeführt sein können, die mittels eines Ratschenspannschlosses 1,4 spannbar sind.

Zur Anbringung eines solchen Ratschenspannschlosses 14 auf beispielsweise den Quersteckem 13 des in einer Einheit obersten Rohrhaltekörpers 1 sind in Höhe der Querbohrungen 11 die innenseitigen Nutseitenwände der Nuten 9 mit einer senkrecht zur Stirnfläche 6 der Rohrhaltekörper 1 ausgerichteten Innennut 15 versehen, deren Breite größer als der Durchmesser der Querbohrungen 11 bzw. der in diesen aufnehmbaren Querstecker 13 ist, so daß sich ein Ansatz des Ratschenspannschlosses 14 noch in die Innennüten 15 erstrecken kann. Dementsprechend kann die Innenut 15 entfallen, wenn ein anderes Spannmittel Verwendung findet.

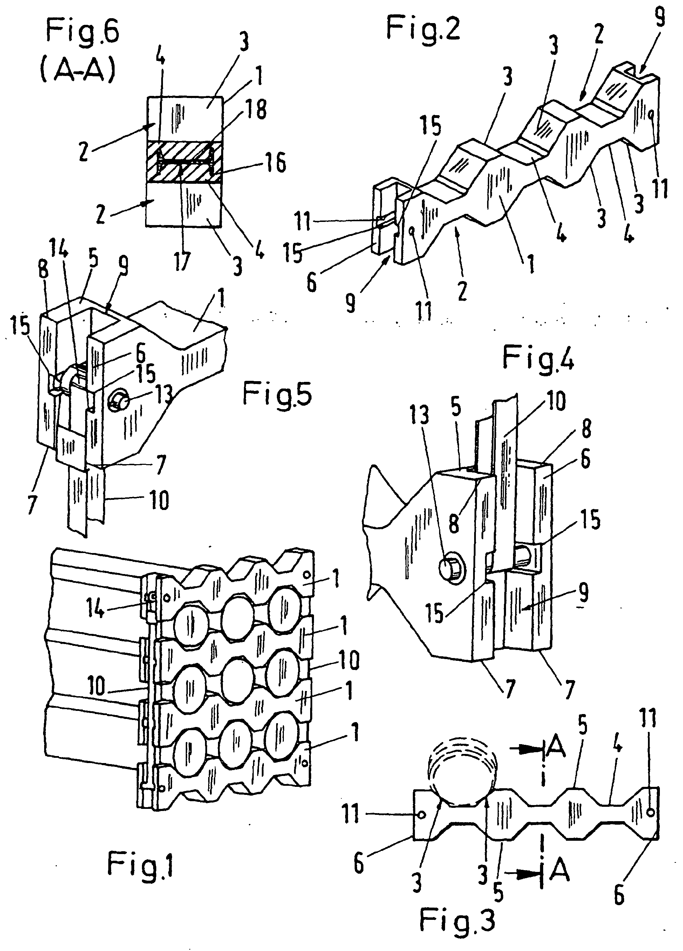

Die Rohrhaltekörper 1 sind in ihrem zwischen den beidseitigen Ausnehmungen 2 gelegenen Mittelteil 16 mit einer Verstärkungseinlage 17 versehen, sofern sie wie bevorzugt aus einem polymeren Werkstoff hergestellt sind. Die Verstärkungseinlage 17 besteht bevorzugt aus metallischem Werkstoff wie Stahl und ist in die Rohrhaltekörper 1 eingegossen bzw. eingespritzt. Vorteilhaft besteht die Verstärkungseinlage 17 aus einem Doppel-T-Profilträger, dessen Mittelschenkel 18 parallel zu den Basisflächen 4 der Ausnehmungen 2 mittig zwischen diesen angeordnet ist, wie dies Fig. 6 veranschaulicht. Die Verstärkungseinlage 17 erstreckt sich im wesentlichen über die gesamte Länge der Rohrhaltekörper 1, ist jedoch auch stirnseitig durch Material der Rohrhaltekörper abgedeckt. Sie nimmt einen überwiegenden Teil der Breite und Höhe des Mittelteils 16 der Rohrhaltekörper 1 ein, wie dies ebenfalls Fig. 6 veranschaulicht. Der Mittelschenkel 18 der Verstärkungseinlage 17 ist im Bereich der Nuten 9 jeweils soweit ausgenommen, daß seine Stimflächen noch vom Material der Rohrhaltekörper 1 im Bereich der Nuten 9 abgedeckt sind.

Als polymerer Werkstoff findet vorzusweise ein Kunststoff, z.B. ein Polyäthylen, Anwendung, der bei hinreichender Festigkeit doch eine gewisse Nachgiebigkeit darbietet, z.B. eine Shorehärte D von 43-48 aufweist,so daß in den Ausnehmungen 2 aufgenommene Rohre nach dem Verspannen der Rohrhaltekörper 1 nicht linienförmig sondern in streifenförmigen Anlagebereichen in Eingriff mit den Flächen 3 bzw. 3 und 4 der Ausnehmungen 2 in Eingriff stehen.

We die Fig. 3 erkennen läßt, können in den Ausnehmungen 2 Rohre sicher aufgenommen und abgestützt werden, deren Durchmesser in einem erheblichen Bereich differieren kann, wobei sich versteht, daß in einer Rohrlage stets nur Rohre ein und desselben Durchmessers abgestützt werden können. Der jeweils bedienbare Durchmesserbereich richtet sich nach der Geometrie der trapezförmigen Ausnehmungen, d.h. nach der Neigung der Seitenflächen 3 und dem gegenseitigen Abstand der Seitenflächen 3 in Höhe der Basisflächen 4. Die Form der Ausnehmungen 2 stellt bei Rohren, die sich mit ihrem Durchmesser in dem vorgesehenen Durchmesserbereich bewegen, allenthalben sicher, daß die Rohre zumindest an den Seitenflächen 3 oder an den Seitenflächen 3 und der Basisfläche 4 einer jeder Ausnehmung 2 anliegen.

Anstelle von Flachgurt 10 und Ratschenspannschloß 14 kann für schwere Einsatzfälle auch ein Schraubspannschloß 20 als Spannmittel vorgesehen sein, das aus einer beispielsweise im Außenquerschnitt sechseckigen hohlen Spannstange 21 und zwei Spannstücken 22 bestehen kann. Die Spannstange 21 ist endseitig mit gegenläufigen Innengewinden 21' versehen, in die mit Außengewinde 23' versehene Spannbolzen 23 der Spannstücke 22 einschraubbar sind, die beide einen Spannhaken 24 tragen, der jeweils auf einen Querstecker 11 aufsetzbar ist. Zumindest ein Spannhaken 24 kann auch durch eine Öse ersetzt sein.

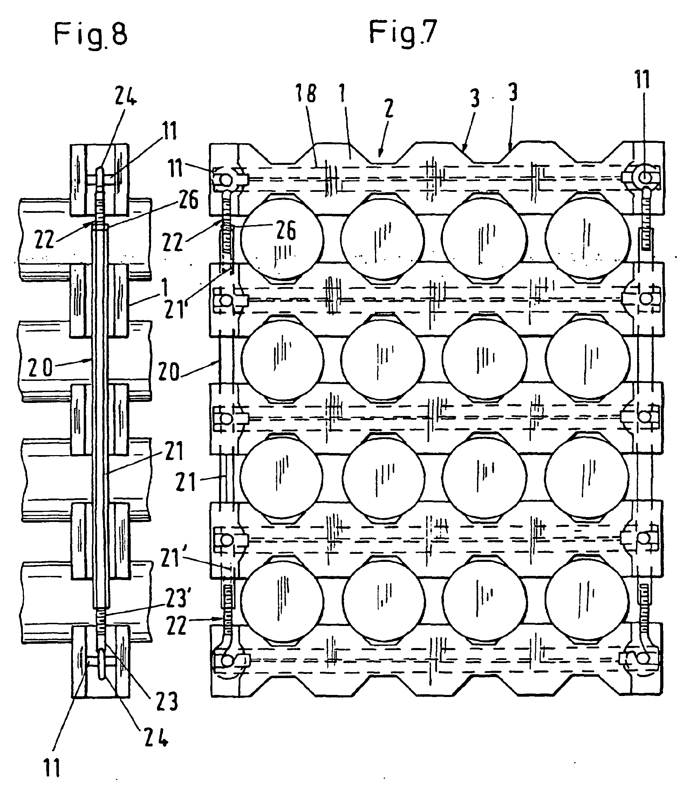

Das Spannen erfolgt in der in Fig. 7 und 8 dargestellten Betriebsstellung durch Verdrehen der Spannstange 21 mit Hilfe eines an die Spannstange 21 angesetzten Schraubenschlüssels oder mit Hilfe eines Spannhebelteils, wenn beispielsweise die Spannstange 21 im Bereich zwischen den Spannstücken 22 mit einer Ein- oder Durchstecköffnung versehen ist. Bei einer solchen Ausführung kann die Spannstange einen beliebigen Außenquerschnitt, z.B. auch einen kreisförmigen, haben.

Zur Sicherung der Spannstellung der Teile des Schraubspannschlosses 20 können alle geeigneten und bekannten Mittel eingesetzt werden. Eine besonders einfache Ausführung sieht vor, daß zumindest auf einem Spannbolzen 23 eine Kontermutter 26 vorgesehen ist, die gegen das benachbarte Stimende der Spannstange 21 in Kontereingriff schraubbar ist.

## Patentansprüche

1. Vorrichtung zur Abstützung von Rohren bei deren Lagerung und Transport in einer vorgegebenen Anordnung neben- und übereinander in beabstandeten Lagen, mit in Betriebsstellung unter und über jeder Rohrlage und dabei vertikal übereinander angeordneten Rohrhaltekörpem (1), die ober- und unterseitig eine Anzahl von einander diametral gegenüberliegenden, untereinander beabstandeten, trapezförmigen Ausnehmungen (2) zur Rohraufnahme aufweisen und durch stimseitige Spannmittel (10, 14; 20) zu einer Einheit zusammenspannbar sind, **dadurch gekennzeichnet, daß** die einteilig ausgebildeten Rohrhaltekörper (1) in ihrem Mitteilteil (16) zwischen den beidseitigen Ausnehmungen (2) mit einer von einem Doppel-T-Profilträger gebildeten, sich im wesentlichen über die gesamte Länge der Rohrhaltekörper (1) erstreckenden Verstärkungseinlage (17) versehen sind, der Mittelschenkel (18) der Verstärkungseinlage (17) parallel zu den Basisflächen (4) der Ausnehmungen (2) mittig zwischen diesen angeordnet ist, die Rohrhaltekörper (1) an ihren Stimenden jeweils mit einer in Betriebsstellung vertikalen, von oben nach unten durchgehenden, die Spannmittel (10, 14; 20) aufnehmenden Nut (9) versehen sind und der Mittelschenkel (18) der Verstärkungseinlage (17) im Bereich der stimseitigen Nuten (9) der Rohrhaltekörper (1) ausgenommen ist.

2. Vorrichtung nach Anspruch 1, **dadurch gekennzeichnet, daß** die Verstärkungseinlage (17) im wesentlichen die Breite und Höhe des Mittelteils (16) der Rohrhaltekörper (1) einnimmt.

3. Vorrichtung nach Anspruch 1 oder 2, **dadurch gekennzeichnet, daß** die Stimenden der Rohrhaltekörper (1) mit einer in Höhe der horizontalen Mittelebene (12) verlaufenden, durchgehenden Querbohrung (11) zur Aufnahme eines die stimseitige Nut durchquerenden Quersteckers (13) versehen sind.

4. Vorrichtung nach Anspruch 3, **dadurch gekennzeichnet, daß** in Höhe der Querbohrungen (11) die innenseitigen Nutseitenwände mit einer senkrecht zur Stirnfläche (6) der Rohrhaltekörper (1) verlaufenden Innennut (15) versehen sind, deren Breite größer als der Durchmesser der Querbohrungen ist.

5. Vorrichtung nach Anspruch 3 oder 4, **dadurch gekennzeichnet, daß** als Spannmittel ein Flachband (10) vorgesehen ist, das um gleichseitige Querstecker (11) im jeweils obersten und untersten Rohrhaltekörper (1) herumlegbar und mittels eines Ratschenspannschlosses (14) spannbar ist.

6. Vorrichtung nach Anspruch 3 oder 4, **dadurch gekennzeichnet, daß** als Spannmittel ein Schraubspannschloß (20) vorgesehen ist, das eine endseitig mit gegenläufigen Innengewinden versehene Spannstange (21) und zwei in diese einschraubbare Spannstücke (22) aufinreist, die mit Querbolzen (13) von Rohrhaltekörpem (1) verbindbare Spannteile (24) und ein Außengewinde (23') aufweisende Spannbolzen (23) umfassen.

7. Vorrichtung nach Anspruch 6, **dadurch gekennzeichnet, daß** die Spannstange (21) zur Bildung einer Spannschlüsselangriffsfläche zumindest bereichsweise mit einer im Querschnitt mehreckigen Außenkontur versehen ist.

8. Vorrichtung nach Anspruch 6 oder 7, **dadurch gekennzeichnet, daß** die Spannstange (21) zumindest bereichsweise eine im Querschnitt sechseckige Außenkontur aufweist.

9. Vorrichtung nach einem der Ansprüche 5 bis 8, **gekennzeichnet durch** Mittel zur Sicherung der Spannstellung der Teile des Schraubspannschlosses (20) in dessen Betriebsstellung.

10. Vorrichtung nach Anspruch 9, **dadurch gekennzeichnet, daß** auf zumindest einem der Spannbolzen (23) eine in Spannstellung der Teile des Schraubspannschlosses (20) mit dem benachbarten Stimende der Spannstange (21) in Kontereingriff schraubbare Kontermutter (26) vorgesehen ist.

11. Vorrichtung nach einem der Ansprüche 1 bis 10, **dadurch gekennzeichnet, daß** der Rohrhaltekörper (1) einstückig ausgebildet ist, aus polymerem und die Verstärkungseinlage (17) aus metallischem Werkstoff besteht, und die Verstärkungseinlage (17) in den Rohrhaltekörper durch Umgießen bzw. Umspritzen eingelassen ist.

## Claims

1. Arrangement for supporting pipes, when they are in store and being transported, in a preset arrangement next to and above one another in spaced layers, having pipe-holding bodies (1) which, in the operating position, are arranged above and below each layer of pipes and, at the same time, one above the other vertically, and which have, on the upper and lower sides, a plurality of trapezoidal pipe-receiving recesses (2) which are diametrically opposed to one another and are spaced apart from one another, the said pipe-holding bodies (1) being able to be clamped together into a unit by clamping means (10, 14; 20) at their end faces, **characterised in that** the pipe-holding bodies (1), which are of a one-piece form, are provided, in their central part (16) between the recesses (2) on the two sides, with a reinforcing insert (17) which is formed by an I-section beam and which extends for substantially the full length of the pipe-holding bodies (2), the web (18) of the reinforcing insert (17) is arranged parallel to the base surfaces (4) of the recesses (2) centrally between the said recesses (2), the pipe-holding bodies (1) are provided, at their ends, with a groove (9) which is vertical in the operating position, is continuous from top to bottom, and receives the clamping means (10, 14; 20), and the web (18) of the reinforcing insert (17) is recessed in the region of the grooves (9) in the ends of the pipe-holding bodies (1).

2. Arrangement according to claim 1, **characterised in that** the reinforcing insert (17) occupies substantially the width and height of the central part (16) of the pipe-holding bodies (1).

3. Arrangement according to claim 1 or 2, **characterised in that** the ends of the pipe-holding bodies (1) are provided with a continuous transverse hole (11), which extends on a level with the horizontal centre-plane (12), for receiving a transverse insertable member (13) which crosses the groove in the end-face.

4. Arrangement according to claim 3, **characterised in that** the inner side-walls of the grooves are provided, on a level with the transverse holes, with an interior groove (15) which extends perpendicularly to the end-face (6) of the pipe-holding bodies (1) and whose width is greater than the diameter of the transverse holes.

5. Arrangement according to claim 3 or 4, **characterised in that** what is provided as a clamping means is a flat strip (10) which can be placed around respective transverse insertable members (11) in the top and bottom pipe-holding bodies (1) and can be tensioned by means of a ratchet tensioner (14).

6. Arrangement according to claim 3 or 4, **characterised in that** what is provided as a clamping means is a straining screw (20) which has a straining rod (21) provided at the ends with opposite-handed inside threads, and two straining members (22), which straining members (22) can be screwed into the said rod (21) and comprise tensioning portions (24) able to be connected to transverse pins (13) belonging to pipe-holding bodies (1), and tensioning shanks (23) having an outside thread (23').

7. Arrangement according to claim 6, **characterised in that**, to form an engagement surface for a tensioning spanner, the straining rod (21) is provided, at least in a region or regions, with an external contour which is polygonal in cross-section.

8. Arrangement according to claim 6 or 7, **characterised in that** the straining rod (21) is provided, at least in a region or regions, with an external contour which is hexagonal in cross-section.

9. Arrangement according to one of claims 5 to 8, **characterised by** means for securing the tensioned position of the parts of the straining screw (20) in the latter's operating position.

10. Arrangement according to claim 9, **characterised in that** there is provided on at least one of the tensioning shanks (23) a lock-nut (26) which, when the parts of the straining screw (20) are in the tensioned position, can be screwed into locking engagement with the adjacent end of the straining rod (21).

11. Arrangement according to one of claims 1 to 10, **characterised in that** the pipe-holding body (1) is of a one-piece form, is composed of polymeric material and the reinforcing insert (17) of metallic material, and the reinforcing insert (17) is inset into the pipe-holding body by enclosure by casting, moulding or injection moulding.

## Revendications

1. Dispositif de calage de tuyaux lors de leurs stockage et transport selon une disposition prédéterminée en couches juxtaposées et superposées espacées, comprenant des corps de retenue de tuyaux (1) qui en position de fonctionnement sont disposés en dessous et au-dessus de chaque couche de tuyaux, verticalement les uns sur les autres, et qui présentent sur les faces supérieure et inférieure un nombre de creux (2) trapézoïdaux diamétralement opposés à distance les uns des autres pour recevoir les tuyaux et pouvant être serrés par des moyens de serrage (10, 14 ; 20) côté frontal pour former une unité,
**caractérisé en ce que**
les corps de retenue de tuyaux (1) formés d'un seul tenant sont munis en leur partie centrale (16) d'un insert de renforcement (17) formé d'un support profilé en forme de double T s'étendant entre les deux côtés des creux (2), essentiellement sur toute leur longueur,
la branche centrale (18) de l'insert de renforcement (17) est disposée parallèlement aux surfaces de base (4) des creux (2) au centre de ceux-ci,
les corps de retenue de tuyaux (1) sont respectivement munis à leurs extrémités frontales d'une rainure (9) verticale s'étendant en position de fonctionnement du haut vers le bas et recevant les moyens de serrage (10, 14 ; 20), et
la branche centrale (18) de l'insert de renforcement (17) est creusée dans la zone des rainures (9) côté frontal des corps de retenue de tuyaux (1).

2. Dispositif selon la revendication 1,
**caractérisé en ce que**
l'insert de renforcement (17) occupe pour l'essentiel la largeur et la hauteur de la partie centrale (16) des corps de retenue de tuyaux (1).

3. Dispositif selon la revendication 1 ou 2,
**caractérisé en ce que**
les extrémités frontales des corps de retenue de tuyaux (1) sont munies d'un alésage transversal (11) traversant s'étendant à hauteur du plan central horizontal (12) pour recevoir une traverse (13) traversant la rainure côté frontal.

4. Dispositif selon la revendication 3,
**caractérisé en ce que**
les parois latérales des rainures côté intérieur sont munies à hauteur des alésages transversaux (11) d'une rainure intérieure (15) s'étendant verticalement à la surface frontale (6) des corps de retenue de tuyaux (1) et dont la largeur est supérieure au diamètre des alésages transversaux.

5. Dispositif selon la revendication 3 ou 4,
**caractérisé en ce que**
le moyen de serrage est une bande plate (10) placée autour des traverses (11) équilatérales des corps de retenue des tuyaux (1) le plus haut et le plus bas et serrée au moyen d'une serrure à cliquet (14).

6. Dispositif selon la revendication 3 ou 4,
**caractérisé en ce qu'**
une serrure à vis (20) présente une tige de serrage (21) munie aux extrémités de filets femelles opposés et de deux pièces de serrage (22) pouvant être vissées dans ceux-ci, comprenant des éléments de serrage (24) reliés à des boulons transversaux (13) de corps de retenue de tuyaux (1) ainsi que des boulons de serrage (23) munis d'un filet mâle (23').

7. Dispositif selon la revendication 6,
**caractérisé en ce que**
la tige de serrage (21) est munie en partie, d'un contour extérieur de section transversale polygonale pour former une surface d'attaque pour une clé de serrage.

8. Dispositif selon la revendication 6 ou 7,
**caractérisé en ce que**
la tige de serrage (21) présente en partie un contour extérieur de section transversale hexagonale.

9. Dispositif selon l'une quelconque des revendications 5 à 8,
**caractérisé par**
des moyens pour bloquer la position de serrage des éléments de la serrure à vis (20) dans sa position de fonctionnement.

10. Dispositif selon la revendication 9,
**caractérisé en ce que**
sur au moins l'un des boulons de serrage (23) un contre-écrou (26) peut être vissé sur l'extrémité frontale voisine de la tige de serrage (21) en position de serrage des éléments de la serrure à vis (20).

11. Dispositif selon l'une quelconque des revendications 1 à 10,
**caractérisé en ce que**
le corps de retenue de tuyaux (1) est formé d'un seul tenant à partir d'un matériau polymère et l'insert de renforcement (17) est métallique et inséré dans le corps de retenue de tuyaux par coulée ou injection.
